# EUROPEAN PATENT APPLICATION

(11) **EP 3 449 738 A1**
(43) Date of publication of application: **06.03.2019**
(21) Application number: 17188084.2
(22) Date of filing: 28.08.2017
(51) Int. Cl.: A23P 30/40, A23C 11/02, A23L 35/00, A23D 7/00

(54) **STABILIZED VEGETABLE WHIPPING CREAM**

(71) Applicant: DuPont Nutrition Biosciences ApS, 1411 Copenhagen K (DK)
(72) Inventor: MADSEN, Finn, 1411 Copenhagen K (DK); BERN, Michael Bo Engelbrecht, 1411 Copenhagen K (DK); ELTZHOLTZ, Morten Rostgaard, 1411 Copenhagen K (DK)
(74) Representative: DuPont EMEA

(57) **Abstract**

A protein free vegetable whipping cream comprising an anionic emulsifier and a low viscosity hydroxypropylmethyl cellulose maintains low viscosity during storage and has excellent whipping properties.

## Description

### FIELD OF THE INVENTION

The present invention relates to a whipping cream, an aerated whipped cream prepared therefrom, a whipping agent additive, and use of a low viscosity hydroxypropylmethyl cellulose (HPMC) or said whipping agent additive for providing low viscosity and stability to a whipping cream, while keeping whipping cream properties, like high overrun and firm whipped cream. Specifically, the present invention relates to protein free vegetable whipping creams with a high content of anionic emulsifier and low viscosity HPMC.

### BACKGROUND OF THE INVENTION

The market for vegetable whipping cream, also commonly known as imitation cream or non-dairy cream, is increasing especially due to the vast variety of applications of the product. There are very low seasonal variations in the final product compared to those of dairy whipping cream and this is a benefit in many applications. Also, the significantly lower manufacturing costs relative to those involved in the manufacture of dairy whipping cream make the product increasingly popular.

Imitation cream is an oil in water (o/w) emulsion produced from vegetable fat, proteins, typically skimmed milk or Na-caseinate + water, sugars, emulsifiers/stabilisers and flavour. The applications vary from industrial to small- scale consumers whom often use the product for cake decoration.

Producing a good imitation cream with short whipping time, good overrun, a firm and stable foam and a good mouth-feel is not easily accomplished. There are many aspects which have an impact on its quality. The foam in the whipped imitation cream is typically fat stabilized, and to obtain good whipping a certain degree of protein desorption from fat globules should take place, and the fat should be partly agglomerated or even with partial coalescence. This is achieved through selection of emulsifiers and by having a partial crystallization of the fat. However, the conditions for having good whipping properties, namely partial destabilization of the emulsion, also have a negative impact on the storage stability of the imitation cream, seen as a thickening of the cream in the bottle/container. This thickening can be so severe that the cream cannot be poured out of the container, and in some cases the whipping performance is also lost.

Various solutions have been attempted to improve storage stability of the imitation cream, e.g. addition of anionic emulsifiers, which through their charge and protein binding properties reduce fat globule interactions. However, the whipping properties (overrun and whipped cream firmness) are then reduced. Hitherto no ingredient has been identified that does not have a negative correlation between imitation cream stability and whipping properties.

In many countries an important quality parameter for imitation cream is the tolerance towards acidification, e.g. through addition of fruit syrups. Typically the protein will denaturate and aggregate, and a very firm and grainy whipped cream with low overrun is achieved.

In vegetable whipping cream or imitation cream important quality parameters are thus a stable cream which will not thicken during storage before aeration, for example in a bottle, and which remains able to aerate relatively quickly, giving a whipped cream with high overrun and a firm texture, which can be shaped and will keep the shape. Whipping cream stability in the bottle and good whipped cream properties have hitherto been conflicting properties, improving the one leading to impairment of the other.

In many countries the tradition of adding acid fruit syrup to the cream during or after the whipping process have further created quality issues in the whipped cream like graininess, foam collapse and extreme firmness, giving very poor spreadability.

Protein, e.g. sodium caseinate, provides emulsion stability during manufacture, but is to some extent displaced from the oil droplet at low temperature to result in a partly destabilized emulsion. Initial foam stabilization will be obtained by protein at the air interface, gradually followed by fat particles. During whipping further desorption of protein from the oil/fat surface takes place which creates partial fat coalescence, which in turn further strengthens stabilization of air through a more coherent fat structure. Protein stabilization of emulsions is due to both steric and ionic stabilization, and protein desorption is achieved/accelerated through use of specific emulsifiers, e.g. mono-di glycerides.

There is a wish in the industry to reduce the cost of the whipping cream. As one of the more costly ingredients is protein, especially sodium caseinate, which is widely used as one of the most efficient protein based emulsifiers, protein free whipping cream (or vegetable whipping cream with low levels of special proteins, like gelatin and acid tolerant protein) is becoming more and more popular. Also for the vegan market protein free vegetable whipping cream is requested.

Cellulose ether products, such as methyl cellulose (MC), hydroxypropylmethyl cellulose (HPMC) and hydroxypropyl cellulose (HPC) are interfacially active hydrocolloids. Especially HPMC and HPC are efficient in both stabilizing emulsions and increasing whipping performance, and they are also able to be partly desorbed from fat globules by e.g. monoglyceride, in a similar manner as protein. HPC and HPMC are commonly used in whipping creams, including protein free whipping creams. Anionic emulsifiers, such as diacetyltartaric acid esters of monoglycerides (Datem) and sodium steroyl lactylate (SSL) bind to the oil droplet and stabilize the emulsion by ionic repulsion and furthermore also contribute to whipping. Datem and SSL are used in many whipping cream formulas, including protein free whipping cream.

When using SSL and HPMC in sufficient high concentration in protein free whipping cream to achieve good whipping properties, SSL creates a firm cream that is hard to pour. Addition of HPMC may reduce the cream firmness, but still create a gelled product, hard to pour. The whipping properties are excellent (high overrun and foam firmness), but the instability of the cream during storage (firming up in the bottle) is a quality defect that has not been solved efficiently without compromising whipping properties.

### OBJECT OF THE INVENTION

It is an object of the invention to provide an efficient whipping agent additive and uses thereof for stabilizing protein free vegetable whipping creams, a whipping cream comprising said whipping agent additive, and whipped food products such as vegetable whipped cream based on this whipping agent.

### SUMMARY OF THE INVENTION

It has surprisingly been found that it is possible to prepare a protein free vegetable whipping cream having exceptionally good storage stability, while maintaining excellent whipping properties. This is achieved by a combination of an anionic emulsifier, e.g. SSL, and a low viscosity grade HPMC or HPC. It has been found that whipping emulsifiers, e.g. mono-di glycerides have to be combined with a high concentration of anionic emulsifier, e.g. SSL, to achieve good cream stability towards partial fat coalescence and high overrun and foam firmness upon whipping. Unfortunately the high SSL concentration leads to high firmness of the whipping cream after filling, probably due to the creation of SSL structures between the fat globules. Addition of high viscosity HPMC, as recommended in the art, further improves cream stability and whipping properties (overrun and foam firmness) and tends to lower firmness, but results in a gel-like texture which is difficult to pour.

We have surprisingly found that using low viscosity HPMC instead of the high viscosity HPMC (or HPC) types recommended for whipping cream containing a high SSL concentration gives rise to a very low viscous and easy pourable whipping cream which is completely storage stable and keeps its excellent whipping properties (overrun and firmness). This extreme stability of the cream regarding keeping low viscosity of the cream and whipping performance is surprisingly still achieved even after temperature fluctuations (heat shock), vibrations, filling at varying temperatures and using fats with considerable variation in melting/crystallization profile.

Accordingly, the present invention relates to a protein free vegetable whipping cream comprising an anionic emulsifier and a low viscosity HPMC or HPC.

The invention further relates to a whipped cream which is an aerated protein free whipping cream as disclosed herein.

The invention further relates to a whipping agent additive comprising an anionic emulsifier and a low viscosity HPMC or HPC.

The invention further relates to use of a whipping agent additive as disclosed herein for providing low viscosity and stability during storage of the protein free whipping cream, while keeping excellent whipping properties, i.e. firmness and aeration. In particular, the use of a low viscosity HPMC or a whipping agent additive comprising a low viscosity HPMC provides low viscosity of the whipping cream and stability tolerance towards variations in filling temperatures, storage temperatures, vibrations and variations in fat crystallization characteristics (e.g. described by solid fat content (SFC) as a function of temperature), while keeping excellent whipping properties. The use of a low viscosity HPMC or a whipping agent additive comprising a low viscosity HPMC makes it possible to reduce the fat content in protein free whipping cream, while keeping low viscosity and stability of the cream and excellent whipping properties as well.

### BRIEF DESCRIPTION OF THE DRAWINGS

Fig. 1 shows the particle size distribution in the cream samples prepared in Example 1.
Fig. 2A shows strain sweep curves (G*) of the cream samples prepared in Example 1.
Fig. 2B shows strain sweep curves (phase angle δ) of the cream samples prepared in Example 1.
Fig. 3 shows the solid fat content (SFC) of the cream samples prepared in Example 2 as a function of temperature.
Fig. 4 shows the particle size distribution of the cream samples prepared in Example 2.
Fig. 5 shows strain sweep curves (G* and phase angle δ) of the cream samples prepared in Example 2.
Fig. 6 shows the particle size distribution in the cream samples prepared in Example 3.
Fig. 7 shows strain sweep curves (G* and phase angle δ) of the cream samples prepared in Example 3.

### DETAILED DESCRIPTION OF THE INVENTION

### Definitions

In the present context, the term "whipping cream" means an o/w emulsion, which can be aerated by whipping, whereby fat globules collide and partially coalesce, forming aggregates or clusters that stabilise the foam structure. A "vegetable whipping cream" is an o/w emulsion, where the fat is vegetable fat or predominantly vegetable fat.

In the present context, the term "protein free vegetable whipping cream" is defined as a vegetable whipping cream containing less than 0.3% protein or no protein, which is whipped cold (whipped cream) or alternatively during freezing (soft serve and ice cream). Protein free vegetable whipping cream is produced by substituting protein with other additives that possess similar properties.

In the present context, "a low viscosity HPMC" is defined as a HPMC type characterized by having a viscosity of 20 cP to 1000 cP when measuring the viscosity of a 2% aqueous solution of HPMC at 20°C, and furthermore characterized by having a hydroxypropyl content of 3-12% and a methoxyl content of 19-30 % (in accordance with current FCC).

In the present context, the term "whipping agent additive" is intended to mean a mixture of substances, some with interfacial properties that due to their adsorption dynamic and their presence at the gas-liquid interface and/or fat-liquid interface and/or ability to desorb protein from the fat globule surface will facilitate the uptake and stabilisation of gas cells when the product that contains the whipping agent is aerated. Also the "whipping agent additive" may contain one or more ingredients selected from the group consisting of hydrocolloids, triglycerides, sugars, sweeteners, bulking agents, e.g. maltodextrin or polydextrose, flavours, salts and up to 0.3% by weight of protein.

In the present context the term "emulsifier" means one or more chemical additives that encourage the suspension of one liquid in another, as in the mixture of oil and water in margarine, shortening, ice cream, and salad dressing.

In the present context "aeration" means to increase overrun compared to a product with no air incorporated.

In the present context "heat shock stability" may be evaluated by any method known to the skilled person for example as described herein in the examples. Heat-shocked samples should mimic the quality that the final consumer may meet after prolonged storage of the whipping cream, contrary to fresh samples, which is the quality that the producer observes and evaluates shortly after production.

In the present context "overrun" is a measure of the volume of air whipped into the product. In the present context "overrun" may be measured by any method known to the skilled person for example as described herein in the examples for example by filling whipped cream in a 240 ml beaker and weighing the 240 ml beaker and calculating % overrun =100 x (240 x 1,02/weight of foam) - 100. In one aspect, an acceptable overrun as measured according to this method is above 200%, more preferable above 250% and even more preferable above 300%.

### Embodiments

The whipping cream of the invention may conveniently comprise 0.2-0.5% by weight of the anionic emulsifier and 0.05-1% by weight of the low viscosity HPMC. In a currently preferred embodiment, the whipping cream of the invention may comprise 0.2-0.5% by weight of the low viscosity HPMC.

In a currently preferred embodiment, the whipping cream of the invention may comprise 0.3-0.5% by weight of the anionic emulsifier. The anionic emulsifier is preferably sodium stearoyl lactylate (SSL). When the anionic emulsifier is SSL, the ratio between SSL and the low viscosity HPMC may be between 1:3 and 8:1, preferably between 1:2 and 2:1.

In a currently preferred embodiment, the low viscosity HPMC is characterized by a viscosity of 20-100 cP in a 2% aqueous solution at 20°C in accordance with the FCC.

The whipping agent additive and the whipping cream may further comprise at least one other emulsifier, preferably selected from the group consisting of polyglycerol esters of fatty acids (PGE), polysorbates, monoglycerides, mono-diglycerides, lactic acid esters of mono- and diglycerides (lactems), diacetyltartaric scid esters of mono- and diglycerides (datems), citric acid esters of mono- and diglycerides (citrems), lecithins, sorbitan monostearates and combinations thereof.

In a currently preferred embodiment, the whipping cream of the invention has a rheology at 5°C in the linear viscoelastic region characterized by a complex modulus below 25 Pa, in particular a rheology at 5°C in the linear viscoelastic region characterized by a complex modulus below 10 Pa. Rheology determinations may be carried out as described in H.A. Barnes, J.F. Hutton and K. Walters, "An introduction to Rheology", Chapter 3.5 ("Oscillatory Shear"), pp 46-50 (Elsevier Science B.V, 1996, Fourth Impression).

The whipping agent additive and whipping cream of the invention may comprise one or more ingredients selected from the group consisting of hydrocolloids, triglycerides, sugars, sweeteners, bulking agents, e.g. maltodextrin or polydextrose, flavours, salts and up to 0.3% by weight of a protein such as gelatin. Examples of hydrocolloids are preferably selected from the group consisting of high acyl gellan, low acyl gellan, alginate, carrageenan, guar gum, locust bean gum and xanthan gum. Examples of triglycerides include vegetable oils, preferably selected from the group consisting of coconut oil, palm kernel oil, palm oil, peanut oil, soybean oil, rapeseed oil, sunflower seed oil, cotton seed oil, olive oil, corn oil or grape seed oil.

The whipping cream of the present invention may comprise between 10% and 35% by weight of fat, preferably between 15% and 30% by weight of fat and more preferably between 20 % and 25% by weight of fat. In a specific embodiment, the whipping cream comprises a low amount of fat such as between 4% and 15% by weight of fat.

In accordance with the findings of the present inventors, the present whipping agent additive may be used for improving the stability of a protein free vegetable whipping cream under fluctuating conditions during filling, transportation and storage. The present whipping agent additive may further be used for improving the stability of a protein free vegetable whipping cream under conditions of fluctuating fat crystallization behaviour. The present whipping cream may further be used for improving the stability and functionality of a protein free vegetable whipping cream with a fat content of less than 26% by weight, in particular a fat content of less than 20% by weight and preferably in creams with a fat content between 4% and 15% by weight (e.g. vegan soft serve (soft ice). The present whipping cream my further be used for providing low viscosity during storage of a protein free vegetable whipping cream.

In an embodiment, the present invention relates to a whipped cream which is an aerated whipping cream as disclosed herein. A method for aeration of a whipping cream to obtain a whipped cream may comprise the following steps: providing a whipping cream as disclosed herein, and aerating said whipping cream to obtain said whipped cream. The whipping of the cream may be performed by any method for whipping cream known by a person skilled in the art e.g. by whipping with a whisk, aeration in an industrial aeration equipment such as in a Mondo mixer or Hansa mixer type or aerated from an aerosol can.

The whipped cream may conveniently be used as a topping for dessert or cake decoration, as ice cream, soft ice, mayonnaise or dressing such as salad dressing.

### EXAMPLES

### Example 1:

In example 1, protein free vegetable whipping cream was produced with the ingredients and additives specified in table 1.
Samples 41-43 have been added increasing concentrations of a high viscosity HPMC with viscosity in the range 2700-5040 cP.
Samples 44-46 have been added increasing concentrations of a high viscosity HPMC with viscosity in the range 11250-21000 cP.

The following process is used:
1.- Add flavor to water
2.- Melt fat to 70°C
3.- Heat water to 65°C in mixer tank and add the mixed dry ingredients, making sure the hydrocolloids are mixed into the sugar first
4.- Increase temperature to 70°C and hydrate until HPMC is dissolved(10-20min). Keep temp. at 70°C during mixing
5.- Add fat phase to the water phase at full speed and mix for 2min. Keep temperature at minimum 68 °C. Then turn down to medium speed and mix for another 3min.
6.- Premix on Silverson 5000RPM/1 min. avoiding air intake.
7.- Keep product sbove 60°C until UHT processing.
8.- UHT - (THE)
   H1: 75°C
   H2: 90°C (30sec)
   H3: 142/3sec.
   C1: 75°C
   Downstream Homogenisation (175/30)
   C2: 45°C
   C3: 20°C
   Glycol: 8°C
9.- Fill in 8 bottles

The ingredients and additives used in the creams are shown in table 1.

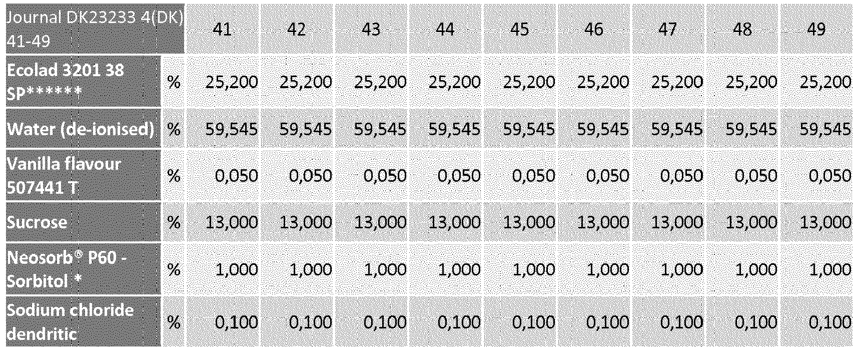

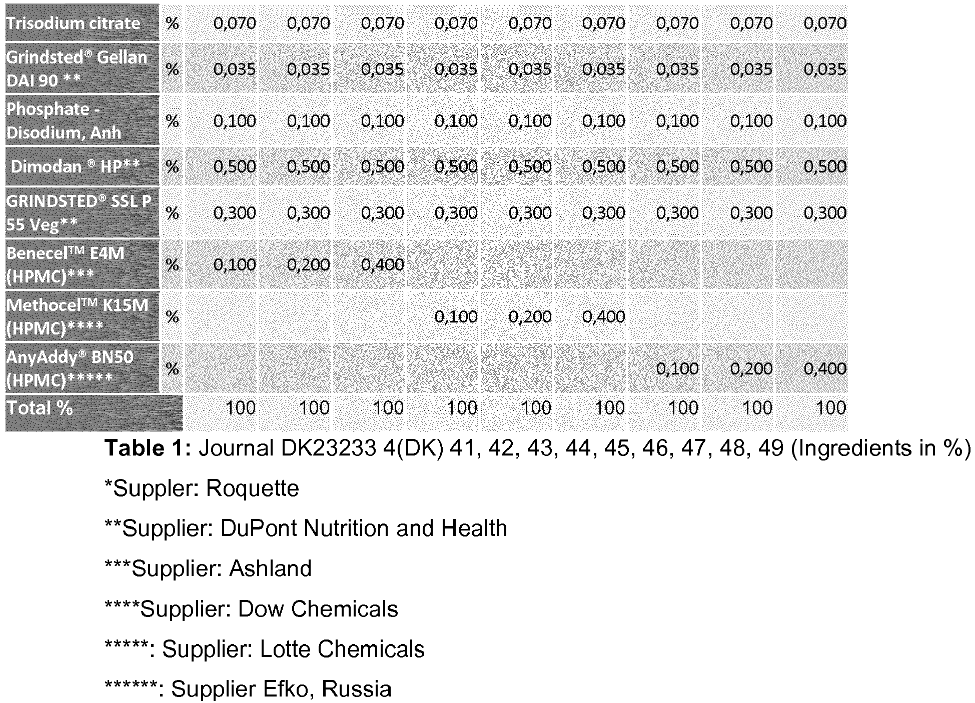

The samples have been evaluated after a heat-shock test, consisting of temperature fluctuations from 5°C to room temperature (each temperature for 12 hours) for 3 days. Then samples were analysed for particle size distribution, using a Malvern Mastersizer 3000, and the rheology of the cream samples were evaluated on an Anton Paar Physica MCR 301 rheometer at 5°C, using the following analytical setup: Samples are measured at 5°C in disposable aluminium cup C-CC27/D/AL and vane system ST22-4V-40. Samples are poured into disposable cups the day before measurement and stored at 5°C until measurement the next day. A strain sweep was performed, with strains from 0.01% to 100 % strain. The complex modulus G* and the phase angle δ was registered as a function of strain. Particle size distribution curves for the cream samples are shown in figure 1, and the strain sweep curves (with G* data) are shown in figure 2A and the strain sweep curves (with phase angle δ data) are shown in figure 2B.

Whipping of of the vegetable cream samples was done on a Hobart mixer at speed 3. The cream, bowl and whisk were cooled to 5 °C before whipping. 400 gram cream was whipped, while measuring torque on the bowl. This allowed following the firming or "whipping profile "of the cream during whipping. The whipping was stopped when the torque was not increased further during 10 seconds of whipping. In this way the cream was whipped to maximum firmness without over-whipping, which will typically lead to foam collapse (lower overrun).

Whipped cream samples were taken out, and overrun was determined. As whipped cream samples typically become firmer during the first period after whipping, firmness of the whipped creams was measured after 30 minutes (as a typical time for use after the whipping). The whipped cream firmness was measured at 5 °C on a Texture Analyzer TAXT*plus* from Stable Micro Systems. A 1 inch plunger was pressed 10 mm into the whipped cream at speed 1 mm/second, and maximum force was detected. In table 2 is shown overrun and Texture analyzer max force for the whipped cream samples.

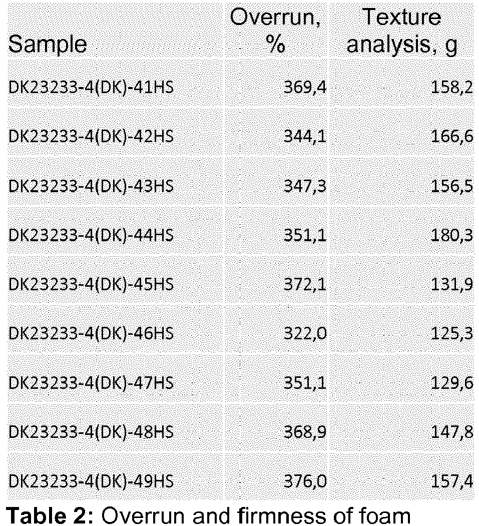

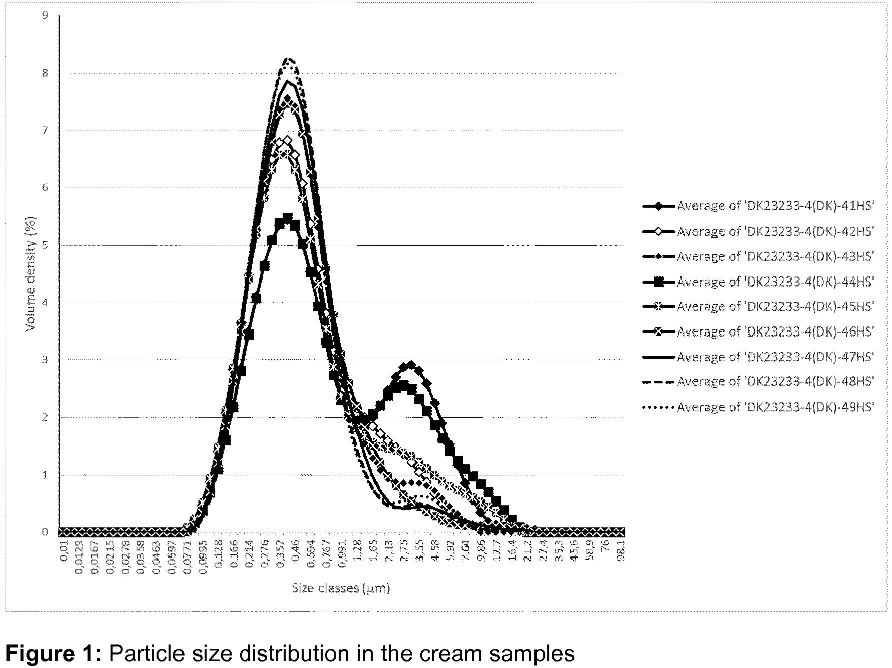

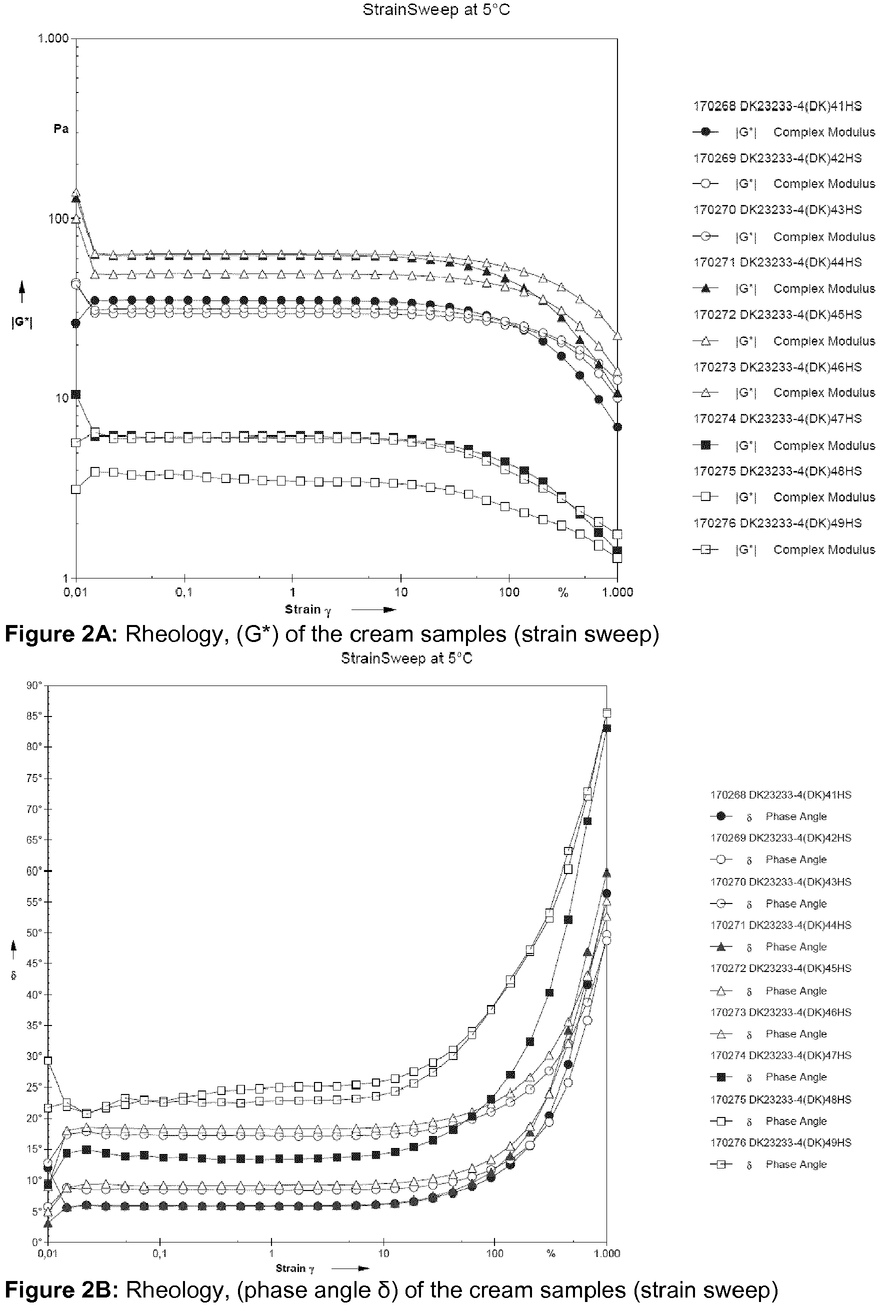

It can be concluded from figure 1 that all samples have a relatively narrow particle size distribution without strong fat aggregation or particle coalescence, indicating good emulsion stability. However, it is also clear that the high viscosity type HPMC products at lower dosage gives a cream with a secondary peak between 1 and 20 µm in particle size, whereas this is not the case for the low viscosity type of HPMC. The low viscosity HPMC thus is more efficient in creating a stable emulsion. From figure 2 it is seen that there is rather limited dosage effect of the HPMC products on the rheology. However, the low viscosity type HPMC (in this case AnyAddy BN50) gives much lower rheology of the cream, making it very easy to pour, whereas the high viscosity HPMC products create a gel-like appearance of the cream, which is also harder to pour. After whipping no major differences between samples are seen regarding overrun and firmness, in general meeting the targets for overrun (above 325 and preferably above 350% overrun). There is no clear effect of HPMC dosage on overrun and foam firmness, however there is a strong dosage effect on whipping speed, giving quicker whipping, when increasing HPMC dosage (for all HPMC types).

### Example 2:

In general vegetable whipping creams are very sensitive to variation in fat type/variation in SFC profile. Typically differences in SFC profile will give differences in emulsion stability, seen as a difference in tendency to fat agglomeration and/or partial fat coalescence, which again may affect cream rheology and whipping properties.

In example 2 the effect of different fat types on the whipping cream quality was investigated, using a high viscosity type HPMC (Benecel™ E4M). Benecel™ E4M is used in 0.3% (and not higher) to avoid too much gel-like structure of the cream, coming from the HPMC. The Ecolad 3201-38SP and Ecolad 3701-35 SP fats are supplied by Efko, and the Akotop P70 fat is supplied by Aarhus Karlshamn (AAK). The difference in solid fat content (SFC) between fat samples is shown in figure 3. 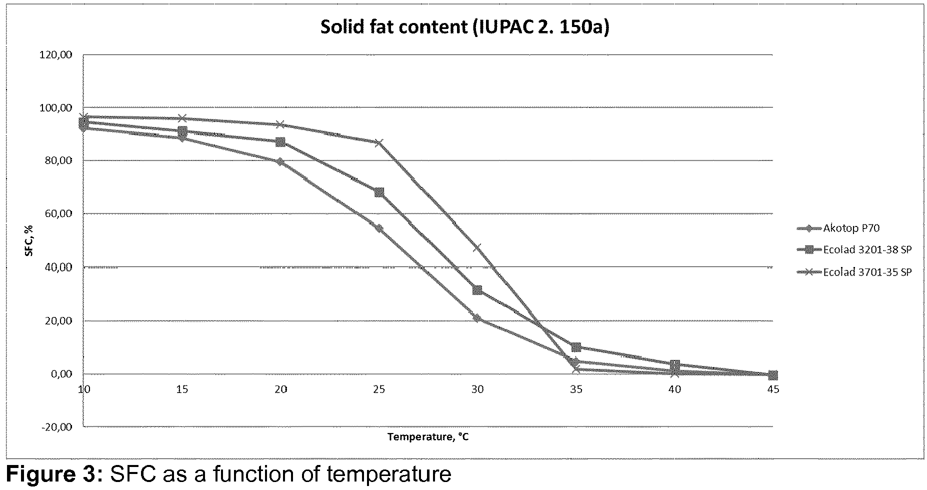 The process for producing the creams is indentical to the process description in example 1.
The recipe for the 3 cream samples with the 3 different fat types is shown in table 3.

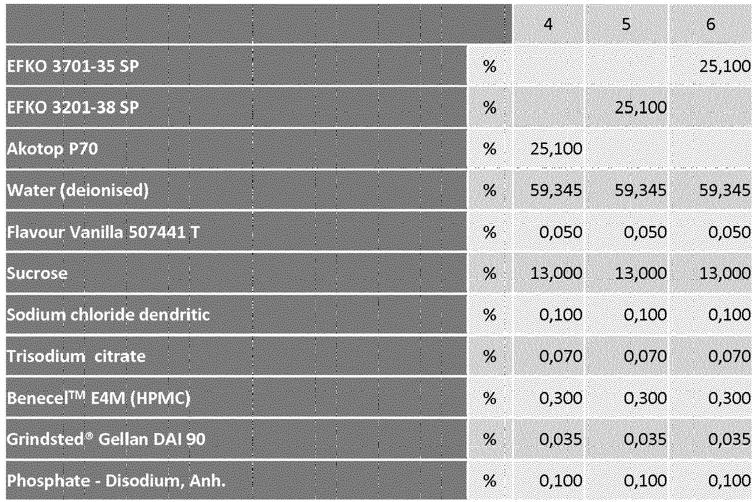

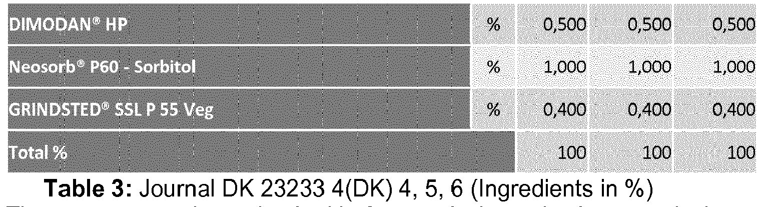

The creams were heat-shocked before analysis, and subsequently the cream samples were analyzed as described in example 1, including whipping on a Hobart mixer with torque and analysis of the whipped cream for overrun and foam firmness.

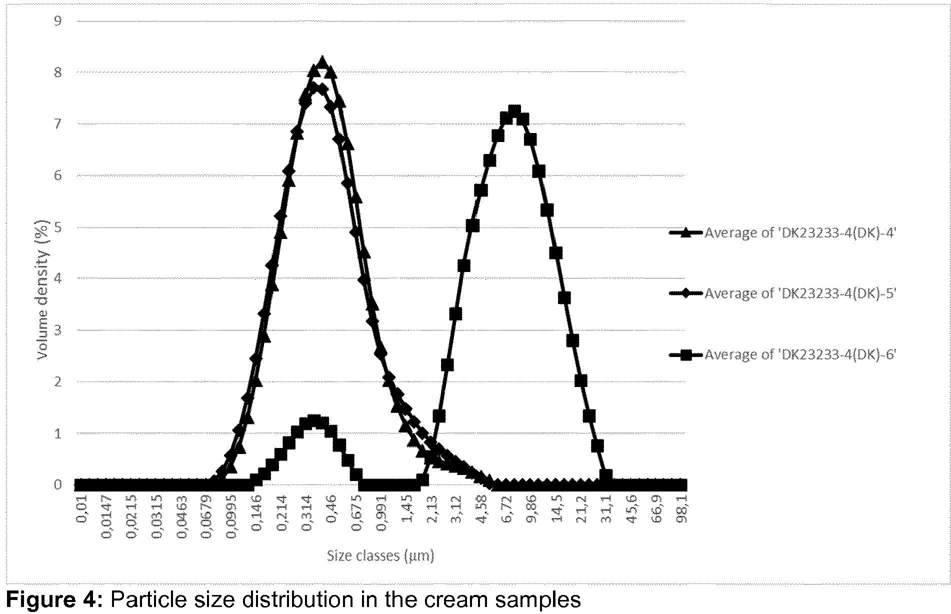

Particle size distribution of the creams is shown in figure 4. The rheology of the creams is shown in figure 5. Overrun and foam firmness results are shown in table 4.

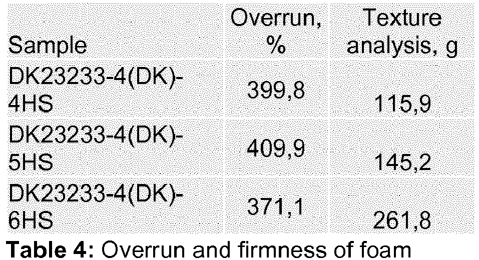

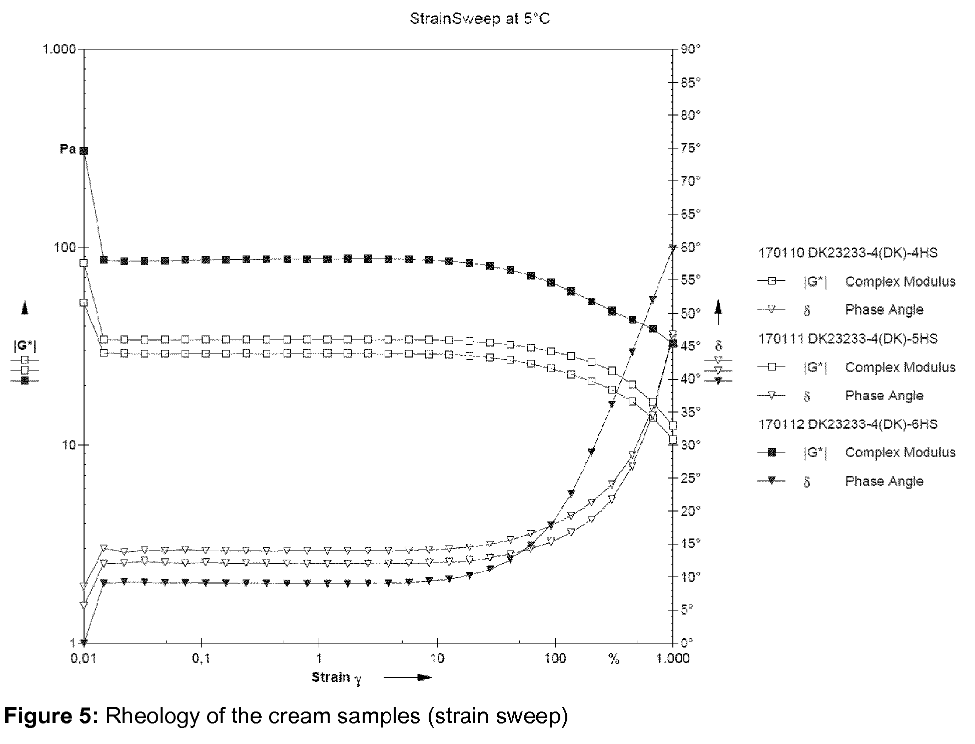

It can be concluded from figure 4 that the sample (DK23233 4(DK) 6) with the highest melting fat (Ecolad 3701-35 SP) had a bi-modal particle size distribution with most of the particles being between 2 and 30 µm. This clearly indicate strong fat aggregation and/or partial coalescence. The lower melting fats, Ecolad 3201-38 SP and Akotop P70, gave a mono-modal particle size distribution with the main part of the particles being less than 1 mm, indicating no fat agglomeration and/or fat partial coalescence. The fat agglomeration in sample DK23233 4(DK) 6 resulted in considerable higher cream rheology, as seen from figure 5, making the cream very difficult to pour. The samples showed differences in foam hardness, illustrating the difference in SFC between the fats. Sample DK233 4(DK) 6 showed extremely high foam firmness, making cake decoration difficult.

### Example 3

Example 3 is a repetition of example 2 with 3 different fat types and including a low viscosity HPMC (AnyAddy® BN50) instead of a high viscosity HPMC (Benecel™ 4M). In this case 0.4% AnyAddy® BN50 was used, as this did not result in any rheology issues (see example 1).

The samples were processed and heat-shocked, as described in example 1. Subsequently the samples were analyzed before whipping, whipped and analyzed after whipping, as described in example 1.
The recipe is shown in table 5. Particle size distribution is hown in figure 6 and rheology is shown in figure 7. Overrun and foam firmness of whipped samples is shown in table 6.

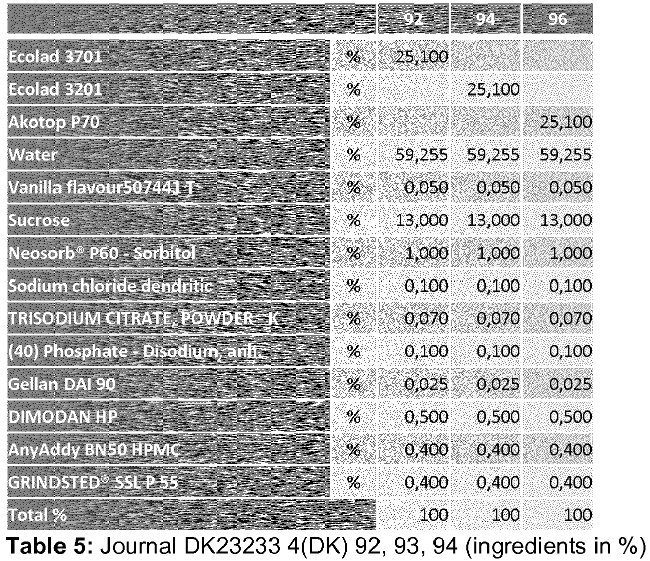

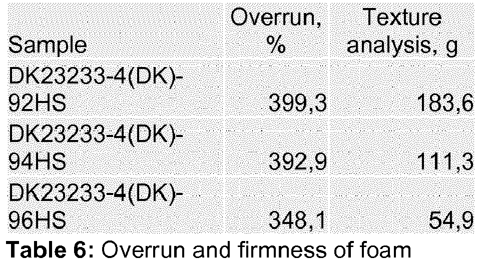

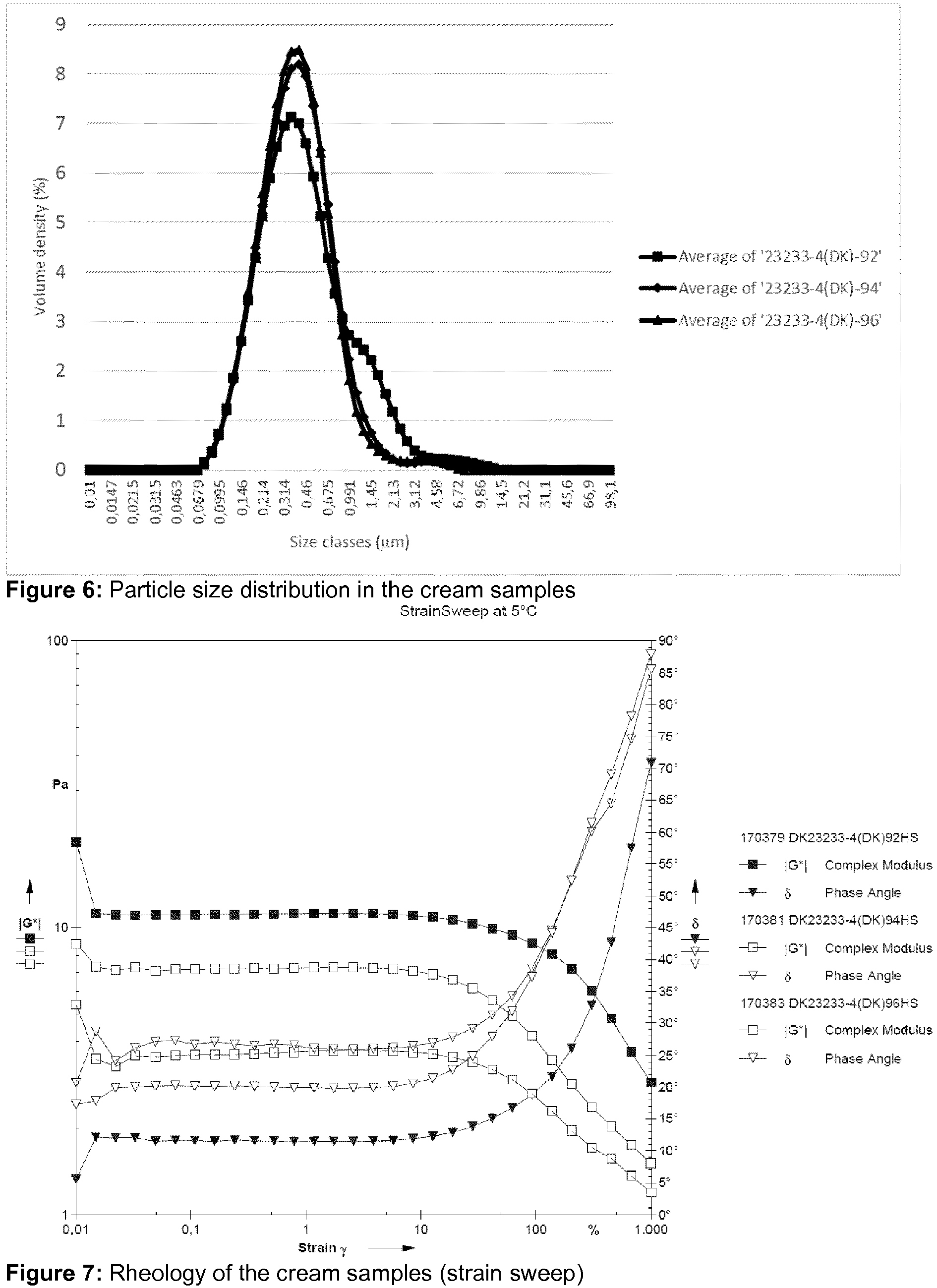

It can be concluded from figure 6 that all samples had a mono-modal particle size distribution with most of the particles being below 1 µm. This clearly indicates a strong no fat agglomeration and/or partial coalescence. The cream rheology (G* in the linear visco-elastic region) was much lower than seen in example 2 with all samples having a G* value of around 10 Pa or lower. All samples looked low viscous and were easy to pour. All samples could be whipped to overrun around 350% or higher. The samples showed differences in foam hardness, illustrating the difference in SFC between the fats. Sample DK23233 (4)DK 96 (with the softest foam) was difficult to use for cake decoration).
In conclusion, when comparing example 2 and 3, the low viscosity HPMC shows a stronger stabilizing effect on the cream emulsion with less fat agglomeration and/or fat partial coalescence, when varying the fat (varying SFC). On top the rheology (G*) is considerably lower, and the cream is much more pourable, independent on fat type. This is in line with the stronger stabilizing effect and lower G* (in the linear visco-elastic region) of cream with low viscosity HPMC, when comparing with high viscosity HPMC types, seen in example 1.

### Example 4:

Generally, reducing the fat content in a cream will have a strong negative effect on whipping properties, both overrun and foam firmness, seen already when lowering the fat content a few percent. As whipping performance in these recipe types is also related to high concentrations of anionic emulsifier, such as SSL, as well as HPMC, it could be interesting to see the robustness of the recipes with low viscosity HPMC against fat content variations.

Due to the cream emulsion robustness achieved when using low viscosity HPMC (according to examples 1, 2 and 3), it could be interesting to see if the cream is robust against variation to filling temperature and subsequent vibrations (simulating transport), evaluating robustness in relation to cream viscosity and whipping properties. Filling temperature robustness and robustness against subsequent vibrations will be a huge benefit for whipping cream producers, as quality deviations due to sensitivity to filling temperature and vibrations is very costly for the producers.

In example 4 the effect of different concentrations of fat in the cream was investigated, using a low viscosity type HPMC (AnyAddy® BN50). Also, the effect of filling temperature and vibrations after filling was investigated.

The recipes are shown in table 7.

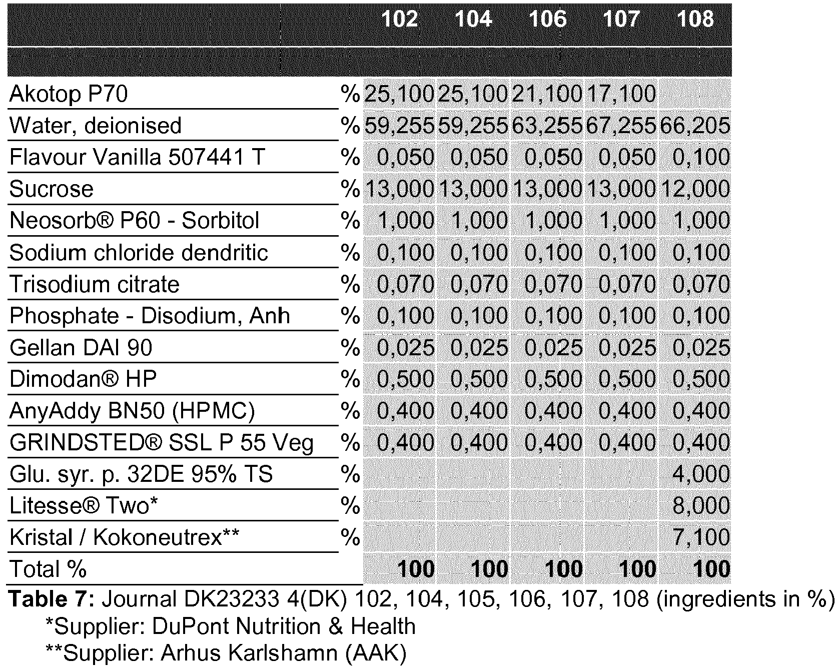

The following process was used:
1.- Add flavour to water
2.- Melt fat to 70°C
3.- Heat water to 65°C in mixer tank and add the mixed dry ingredients, making sure the hydrocolloids are mixed into the sugar first
4.- Increase temperature to 70-72°C and hydrate for 10min.(important to keep stirring). can be done outside a water bath as it will hold it's temp. well
5.- Add fat phase to the water phase at full speed and mix for 2min. Then turn down to medium speed and mix for another 3min.
6.- Premix on Silverson 5000RPM/1 min. avoiding air intake.
7.- Keep product in 68°C water bath, un till processing to keep it above 60°C at all times.
   UHT - (THE)
   H1: 75°C
   H2: 90°C (30sec)
   H3: 142/3sec.
   C1: 75°C
   Downstream Homogenization(175/30)
   C2: 45°C
   C3: 20°C
   Glycol: 8°C (not used for trials 102 - filling at 20°C)

After the processing and filling, part of the bottles of sample DK23233 4(DK) 102, filled at 20°C, is cooled to 5°C on cold storage, without agitation, while another part of the bottles of sample DK23233 4(DK) 102 is cooled to 5°C on cold storage, while at the same time vibrating the bottles on a horizontal shaker, IKA® KS 130 Basic, with 80 rpm for 36 hours. Sample DK23233 (4) 104, being an identical recipe to DK23233 4(DK) 102, is stored directly on 5°C cold storage, as done normally. Samples DK23233 4(DK) 106 and 107 are identical to DK23233 4(DK) 104 and treated the same way, except the fat content is now lowered from 26% to 22% and 18% respectively.
The samples DK 23233 4(DK) 102 (+/- vibration), DK 23233 4(DK) 104, DK 23233 4(DK) 106 and DK23233 4(DK) 107 was subsequently analyzed in the following way:
- The cream viscosity was analyzed at 5°C, using a Brookfield with spindle S63, 30 rpm and measurement after 30 seconds.
- The cream was whipped at 5°C on a Hobart mixer with torque, using a whisker and speed 3, until the torque reached maximum. Overrun was measured as described in example 1, and foam firmness was measured after approximately 10 minutes.

The results are shown in table 8.

**Table 8: viscosity of cream and overrun and firmness of foam**

| Trial No | Whip time | OV% | Firmness TAXT2 (g) | Visc. Brookefield S63/30RPM/30se c |
|---|---|---|---|---|
| 102 Vibrating during cryst. | 85 | 347 | 174,6 | 980 |
| 102 | 84 | 365 | 162,9 | 1050 |
| 104 | 76 | 340 | 140,1 | 803 |
| 106 | 82 | 352 | 133,1 | 755 |
| 107 | 87 | 366 | 101 | 635 |

From table 8 it can be concluded that viscosity and whipping performance (overrun and foam firmness) is relatively independent of filling temperature and vibration during crystallization on cold storage (DK23233 4(DK) 102(+/- vibration) and DK23233 4(DK) 104), thus extreme robustness towards variation in filling conditions and transportation). Also, it can be concluded (DK23233 4(DK) 104, 106, 107) that even when lowering fat content from 26% to 22% and even 18% will results in unchanged overrun and still with a foam firmness that makes cake decoration possible.

Sample DK23233 4(DK) 108, produced with same whipping agent additive composition, including the low viscosity HPMC, but with much lower fat content (8% fat), based on coconut and glucose syrup and polydextrose (Litesse® Two) addition, is a simulation of a soft serve recipe. When running the emulsion through a soft ice machine, an overrun of 82% was achieved, and very fine air incorporation was noticed.

## Claims

1. A protein free vegetable whipping cream comprising an anionic emulsifier and a low viscosity hydroxypropylmethyl cellulose (HPMC).

2. The whipping cream of claim 1 comprising 0.2-0.5% by weight of the anionic emulsifier.

3. The whipping cream of claim 1 or 2 comprising 0.05-1 % by weight of the low viscosity HPMC.

4. The whipping cream according to claim 3 comprising 0.2-0.5% by weight of the low viscosity HPMC.

5. The whipping cream according to any one of claims 1-4 comprising 0.3-0.5% by weight of the anionic emulsifier.

6. The whipping cream according to any one of claims 1-5, wherein the low viscosity HPMC is **characterized by** a viscosity of 20-100 cP in a 2% aqueous solution at 20°C.

7. The whipping cream according to any one of claims 1-6, wherein the anionic emulsifier is sodium stearoyl lactylate (SSL).

8. The whipping cream according to any one of claims 1-7 comprising 0.3-0.5% by weight SSL and further comprising at least one other emulsifier selected from the group consisting of polyglycerol esters of fatty acids (PGE), polysorbates, monoglycerides, mono-diglycerides, lactic acid esters of mono- and diglycerides (lactems), diacetyltartaric scid esters of mono- and diglycerides (datems), citric acid esters of mono- and diglycerides (citrems), lecithins, sorbitan monostearates and combinations thereof.

9. The whipping cream according to any one of claims 1-8 which has a rheology at 5°C in the linear viscoelastic region **characterized by** a complex modulus below 25 Pa.

10. The whipping cream according to any one of claims 1-9 which has a rheology at 5°C in the linear viscoelastic region **characterized by** a complex modulus below 10 Pa.

11. The whipping cream according to any one of claims 1-10, wherein the ratio between the anionic emulsifier and the low viscosity HPMC is between 1:3 and 8:1.

12. The whipping cream according to any one of claims 1-11, wherein the ratio between the anionic emulsifier and the low viscosity HPMC is between 1:2 and 2:1.

13. The whipping cream according to any one of claims 1-12 further comprising one or more ingredients selected from the group consisting of hydrocolloids, triglycerides, sugars, sweeteners, bulking agents, e.g. maltodextrin or polydextrose, flavours, salts and up to 0.3% by weight of a protein such as gelatin.

14. The whipping cream according to claim 13, wherein the hydrocolloid is selected from the group consisting of high acyl gellan, low acyl gellan, guar gum, locust bean gum, alginate, carrageenan, pectin and xanthan gum.

15. The whipping cream according to claim 13 or 14, wherein the triglyceride is a vegetable oil selected from the group consisting of coconut oil, palm kernel oil, palm oil, peanut oil, soybean oil, rapeseed oil, sunflower seed oil, cotton seed oil, olive oil, corn oil or grape seed oil.

16. The whipping cream according to any one of claims 1-15 comprising 10-35% by weight of fat.

17. The whipping cream according to any one of claims 1-15 comprising 4-15% by weight of fat.

18. A whipping agent additive comprising an anionic emulsifier and a low viscosity HPMC.

19. The whipping agent additive according to claim 16, wherein the low viscosity HPMC is **characterized by** a viscosity of 20-100 cP in a 2% aqueous solution at 20°C.

20. The whipping agent additive according to claim 18 or 19, wherein the anionic emulsifier is sodium stearoyl lactylate (SSL).

21. The whipping agent additive according to any one of claims 18-20 comprising SSL and further comprising at least one other emulsifier selected from the group consisting of polyglycerol esters of fatty acids (PGE), polysorbates, monoglycerides, mono-diglycerides, lactic acid esters of mono- and diglycerides (lactems), diacetyltartaric scid esters of mono- and diglycerides (datems), citric acid esters of mono- and diglycerides (citrems), lecithins, sorbitan monostearate and combinations thereof.

22. The whipping agent additive according to any one of claims 18-21, wherein the ratio between the anionic emulsifier and the low viscosity HPMC is between 1:3 and 8:1.

23. The whipping agent additive according to any one of claims 18-22, wherein the ratio between the anionic emulsifier and the low viscosity HPMC is between 1:2 and 2:1.

24. The whipping agent additive according to any one of claims 18-23 further comprising one or more ingredients selected from the group consisting of hydrocolloids, triglycerides, sugars, sweeteners, bulking agents, e.g. maltodextrin or polydextrose, flavours, salts and up to 0.3% by weight of protein.

25. The whipping agent additive according to claim 24, wherein the hydrocolloid is selected from the group consisting of high acyl gellan gum, guar gum, locust bean gum, alginate, carrageenan, pectin and xanthan gum.

26. The whipping agent additive according to claim 24 or 25, wherein the triglyceride is a vegetable oil selected from the group consisting of coconut oil, palm kernel oil, palm oil, peanut oil, soybean oil, rapeseed oil, sunflower seed oil, cotton seed oil, olive oil, corn oil or grape seed oil.

27. Use of a whipping agent additive according to any one of claims 18-26 for improving the stability of a protein free vegetable whipping cream under fluctuating conditions during filling, transportation and storage.

28. Use of a whipping agent additive according to any one of claims 18-26 for improving the stability of a protein free vegetable whipping cream under conditions of fluctuating fat crystallization behaviour.

29. Use of a whipping agent additive according to any one of claims 18-26 for improving the stability and functionality of a protein free vegetable whipping cream with a fat content of less than 26% by weight.

30. Use of a whipping agent additive according to any one of claims 18-26 for improving the stability and functionality of a protein free vegetable whipping cream with a fat content of less than 20% by weight.

31. Use of a whipping agent additive according to any one of claims 18-26 in creams with a fat content between 4% and 15% by weight.

32. Use of a whipping agent additive according to any one of claims 18-26 for providing low viscosity during storage of a protein free vegetable whipping cream.

33. A whipped cream prepared by aerating a protein free vegetable whipping cream according to any one of claims 1-17.

34. A whipped cream according to claim 29 selected from the group consisting of toppings for dessert or cake decoration, ice cream, soft ice, mayonnaise and salad dressing.
